# FASCICULE DE BREVET EUROPEEN

(11) **EP 3 230 090 B1**
(45) Date de publication et mention de la délivrance du brevet: **22.08.2018**
(21) Numéro de dépôt: 15808246.1
(22) Date de dépôt: 11.12.2015
(51) Int. Cl.: B60C 11/04, B60C 11/13

(54) **DISPOSITIF ATTENUATEUR DE BRUIT EN ROULAGE POUR PNEU**
VORRICHTUNG ZUR DÄMPFUNG DES FAHRBAHNGERÄUSCHES FÜR EINEN REIFEN
DEVICE FOR ATTENUATING ROAD NOISE FOR A TIRE

(30) Priorité: 12.12.2014 FR 1462345
(43) Date de publication de la demande: 18.10.2017
(73) Titulaire: Compagnie Générale des Etablissements Michelin, 63000 Clermont-Ferrand (FR); Michelin Recherche et Technique S.A., 1763 Granges-Paccot (CH)
(72) Inventeur: ROTY, Gael, 63040 Clermont Ferrand Cedex 9 (FR)
(74) Mandataire: Regimbeau
(86) Numéro de dépôt international: PCT/EP2015/079486
(87) Numéro de publication internationale: WO 2016/092095

(56) Documents cités:
- EP-A1- 0 908 330
- DE-A1- 4 403 662
- DE-A1-102006 031 779
- JP-A- 2007 210 569
- JP-A- 2012 116 339
- JP-A- 2013 023 009

## Description

### DOMAINE DE L'INVENTION

La présente invention concerne les bandes de roulement de pneu et plus particulièrement les bandes de roulement comprenant des rainures ces dernières étant pourvues de dispositifs de fermeture pour réduire le bruit généré par la mise en résonance de l'air dans ces rainures lors du roulage.

### ÉTAT DE LA TECHNIQUE

De manière usuelle un pneu comprend une bande de roulement destinée à être en contact avec une route lors du roulage d'un véhicule pourvu de pneus. Cette bande de roulement est pourvue d'un dessin de sculpture formé d'éléments en relief, ces éléments délimitant des rainures permettant le drainage d'eau présente sur la route par temps de pluie. Toutefois, la présence de rainures et notamment de rainures orientées circonférentiellement, est source de bruit en roulage.

### Définitions :

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document toute direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une rainure désigne l'espace délimité par des parois de matière en vis-à-vis, ces parois étant reliées entre elles par un fond de rainure. Dans les conditions usuelles de roulage, les parois délimitant cette rainure ne peuvent venir en contact l'une contre l'autre.

La surface de roulement d'une bande de roulement correspond à la surface de la bande destinée à venir en contact avec un sol lors du roulage d'un pneu pourvu d'une telle bande.

Il est connu que le passage dans la région de contact d'une bande de roulement avec une route, lors du roulage, génère une circulation d'air dans chaque rainure. Avec la route, chaque rainure forme une sorte de tube ayant deux extrémités ouvertes, la longueur du tube correspondant à la longueur de l'empreinte de contact.

L'air contenu dans ce tube forme une colonne d'air qui est mise en vibration lors du roulage et dont la fréquence de résonance dépend de la longueur séparant les deux extrémités du tube et en conséquence de la longueur de rainure en contact avec la chaussée.

Cette résonance de l'air dans les rainures a comme conséquence de générer, dans un véhicule équipé avec ces pneus, un bruit à l'intérieur du véhicule et un bruit à l'extérieur du véhicule. Ces bruits intérieur et extérieur correspondent le plus souvent à une fréquence voisine de ou égale à 1 kHz correspondant à une fréquence particulièrement sensible à l'oreille humaine.

Afin de réduire un tel bruit de résonance, il est connu de disposer (voir par exemple le document de brevet FR 2715891), dans chaque rainure d'orientation circonférentielle ou globalement circonférentielle, une pluralité de dispositifs atténuateurs de bruit, chaque dispositif étant composé de membranes ou lames flexibles relativement peu épaisses en mélange de caoutchouc, chaque membrane ou lame flexible occupant toute la section de la rainure ou à tout le moins une grande partie de cette section pour former un dispositif de fermeture. La mise en place de ces lames flexibles modifie la longueur de chaque tuyau d'air et par là permet de modifier la fréquence de résonance. Il en résulte une modification du bruit perçu. La nature élastique du matériau de chaque lame flexible assure en outre des efforts de rappel suffisants pour assurer le retour des lames flexible dans une position de fermeture de la rainure lorsqu'il n'y a plus de flux de liquide dans ladite rainure.

Chaque lame flexible peut s'étendre à partir du fond de la rainure ou être fixée à l'une au moins des parois délimitant ladite rainure. Par relativement peu épaisse, on entend que chaque lame flexible est apte à fléchir pour ouvrir au moins partiellement la section de la rainure sous l'effet d'un flux de liquide notamment lors d'un roulage par temps de pluie. Ces mêmes lames restent en position de fermeture de la rainure lors de roulage par temps sec. Comme cela a été rappelé plus haut, les dispositifs formés de lames flexibles décrits dans l'art antérieur - de par la nécessité de pouvoir fléchir sous un flux de liquide - sont reliés soit au fond d'une rainure soit à l'une des parois latérales délimitant une rainure.

Grâce à ces lames flexibles, la longueur de la colonne d'air dans chaque rainure circonférentielle est réduite par rapport à la longueur totale de la rainure dans le contact, ce qui conduit à un changement de la fréquence de résonance. Le déplacement de fréquence se fait vers des valeurs de fréquences de résonance moins sensibles à l'oreille humaine.

Dans les dispositifs formés d'une lame unique portée par le fond d'une rainure de profondeur donnée, il est parfois difficile de concilier un bon moulage et une bonne flexibilité de la lame. En effet, plus la hauteur de la lame flexible augmente et plus l'arrivée de matière lors du moulage est délicate d'autant que l'épaisseur de chaque lame flexible est faible. Cet état de fait conduit la personne du métier à certains compromis notamment sur l'épaisseur de la lame flexible. Il s'ensuit une plus grande rigidité à l'état neuf pour chaque lame flexible, cette augmentation de rigidité étant encore plus sensible après usure partielle.

Les documents DE 44 03 662 A1 et JP 2007/210569 décrivent des pneus pourvus de dispositifs réducteurs de bruit et montrent des bandes de roulement selon le préambule de la revendication 1.

Le document EP 908330-B1 divulgue un dispositif réducteur de bruit, ce dispositif étant formé par trois lames flexibles dont deux sont fixées aux parois délimitant une rainure et la troisième au fond de cette rainure. Dans cette disposition la lame fixée sur le fond s'étend jusqu'à la surface de roulement à l'état neuf et pose les mêmes problèmes de réalisation que ceux déjà évoqués. Par ailleurs les deux autres lames ne présentent pas une flexibilité suffisante.

La présente invention propose une solution à ce problème.

L'expression "paroi latérale délimitant une rainure" s'interprète dans le présent document comme désignant l'une ou l'autre des parois latérales en vis-à-vis, ces parois étant reliés entre elles par un fond de rainure. La hauteur du fond de rainure correspond à la limite légale d'usure repérée par au moins un indicateur d'usure.

### BREF EXPOSE DE L'INVENTION

La présente invention est un perfectionnement des dispositifs de fermeture de rainure permettant une réduction du bruit de résonance et vise à la fois à obtenir un moulage et un démoulage aisé des lames flexibles formant le dispositif de fermeture des rainures ainsi qu'une fermeture complète de la rainure.

À cet effet, l'invention a pour objet une bande de roulement pour pneu, cette bande de roulement ayant une surface de roulement destinée à venir en contact avec une chaussée et comprenant au moins une rainure de largeur W et de profondeur P délimitée par deux parois latérales se faisant face, ces parois latérales étant reliées entre elles par un fond de rainure. Au moins une rainure comporte une pluralité de dispositifs de fermeture pour réduire le bruit de résonance en roulage généré par cette rainure, chaque dispositif de fermeture comprenant au moins deux lames flexibles, une première lame flexible solidaire du fond de la rainure et prévue pour fléchir autour d'un premier axe et une deuxième lame flexible solidaire d'une paroi latérale délimitant la rainure et prévue pour fléchir autour d'un deuxième axe, la première lame flexible liée au fond ayant une hauteur maximale H. Cette bande est telle que les lames ont des géométries appropriées pour coopérer les unes avec les autres afin de fermer au moins 70% de la section transversale de la rainure. En outre, l'épaisseur de la première lame flexible portée par le fond de rainure est inférieure à l'épaisseur de chaque deuxième lame flexible portée par une paroi latérale.

Grâce à ce dispositif, la première lame flexible peut fléchir autour d'un premier axe passant par les points de contact de la paroi d'extrémité de cette lame avec le fond de la rainure ; la flexion sous l'effet d'un fluide circulant dans la rainure conduit la première lame flexible à se plaquer contre le fond de la rainure. La deuxième lame flexible liée à une paroi latérale délimitant la rainure a tendance à fléchir autour d'un axe parallèle à ladite paroi ; la flexion sous l'effet d'un fluide circulant dans la rainure conduit la deuxième lame flexible à se plaquer contre la paroi latérale.

Dans le cas d'une faible hauteur de liquide circulant dans la rainure, seules les lames flexibles fixées aux parois latérales sont soumises à flexion ce qui est favorable du point de vue de l'usure de ces lames en roulage.

Comme variante de l'invention il faut considérer qu'il peut y avoir plusieurs lames flexibles fixées au fond de la rainure ces lames flexibles formant une première lame telle que décrite plus haut.

De manière plus préférentielle, la hauteur maximale H de chaque première lame flexible fixée sur le fond est au plus égale à 80% de ladite profondeur et encore plus préférentiellement au plus égale à 50% de la profondeur P à l'état neuf.

Avantageusement le premier axe de flexion est perpendiculaire ou quasiment perpendiculaire au deuxième axe de flexion.

Chaque lame flexible comprend deux faces principales séparées l'une de l'autre par une distance correspondant à l'épaisseur de la lame. Ces deux parois principales sont reliées par un bord dont la géométrie est appropriée pour satisfaire la condition de fermeture de la rainure.

Dans une variante intéressante, les deuxièmes lames flexibles comportent un bord interne faisant un angle moyen non nul avec une direction tangente à la surface de roulement à l'état neuf.

Préférentiellement cet angle moyen du bord interne des deuxièmes lames flexibles est au moins égal à 20° afin de faciliter le démoulage en réduisant les efforts agissant sur les lames pendant cette opération de démoulage.

Avantageusement les lames flexibles du dispositif selon l'invention coopèrent pour fermer la section de la rainure sur au moins 90% de la section de ladite rainure.

Avantageusement, l'épaisseur de chaque première lame flexible liée au fond est au plus égale à 0.4 mm et encore plus avantageusement, au plus égale à 0.3 mm.

Dans une variante de l'invention, le dispositif de réduction de bruit formé dans une rainure comprend une première lame flexible de géométrie triangulaire liée au fond de la rainure et au moins une deuxième lame flexible portée sur une paroi latérale dont la géométrie est complémentaire de celle de la première lame.

Dans une autre variante, le dispositif de réduction de bruit formé dans une rainure comprend une première lame flexible de géométrie triangulaire liée au fond de la rainure, cette première lame étant elle-même formée d'au moins deux lames et au moins une deuxième lame flexible portée sur une paroi latérale dont la forme est complémentaire de celle de la première lame. Dans cette variante de l'invention, la division de la première lame flexible portée par le fond de la rainure en plusieurs lames permet de maintenir une certaine aptitude à la flexion même après usure partielle de cette première lame.

Dans une autre variante, le dispositif de réduction de bruit formé dans une rainure comprend une première lame flexible de géométrie triangulaire liée au fond de la rainure et au moins une deuxième lame flexible portée sur une paroi latérale dont la forme est complémentaire de celle de la première lame, ces première et deuxième lames flexibles étant décalées les unes par rapport aux autres dans la direction principale de la rainure de manière à pouvoir générer un léger chevauchement entre lesdites lames et ainsi obtenir un plus grand taux de fermeture de la section de la rainure.

Par direction principale d'une rainure on entend ici la direction suivie par les fluides s'écoulant dans ladite rainure.

Grâce au dispositif selon l'invention, il est à la fois possible de fermer à l'état neuf la totalité de la rainure tout en conservant une flexibilité importante de chaque partie du dispositif et cela quel que soit l'état d'usure de la bande.

Le taux de fermeture d'un dispositif selon l'invention correspond au pourcentage de la section transversale de la rainure fermée par une telle lame flexible à un état d'usure donné. Un taux de fermeture égal à 100% à neuf signifie que la section transversale de la rainure est en totalité fermée par le dispositif à l'état neuf.

Ce dispositif réducteur de bruit peut bien entendu être mis en oeuvre avec tout type de rainure, que ce soit une rainure d'orientation circonférentielle, ou transversale ou oblique.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 montre une vue en surface d'une bande de roulement selon l'invention à l'état neuf ;
La figure 2 montre un dispositif selon l'invention dans une position de fermeture d'une rainure ;
La figure 3 montre le dispositif de la figure 2 dans une position d'ouverture sous l'action d'un écoulement de liquide dans la rainure ;
La figure 4 montre une variante de l'invention dans une position de fermeture d'une rainure ;
La figure 5 montre une variante de l'invention dans une position de fermeture d'une rainure ;
La figure 6 montre une autre variante de l'invention dans une position de fermeture d'une rainure ;
La figure 7 montre une vue en surface de la variante montrée avec la figure 6.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

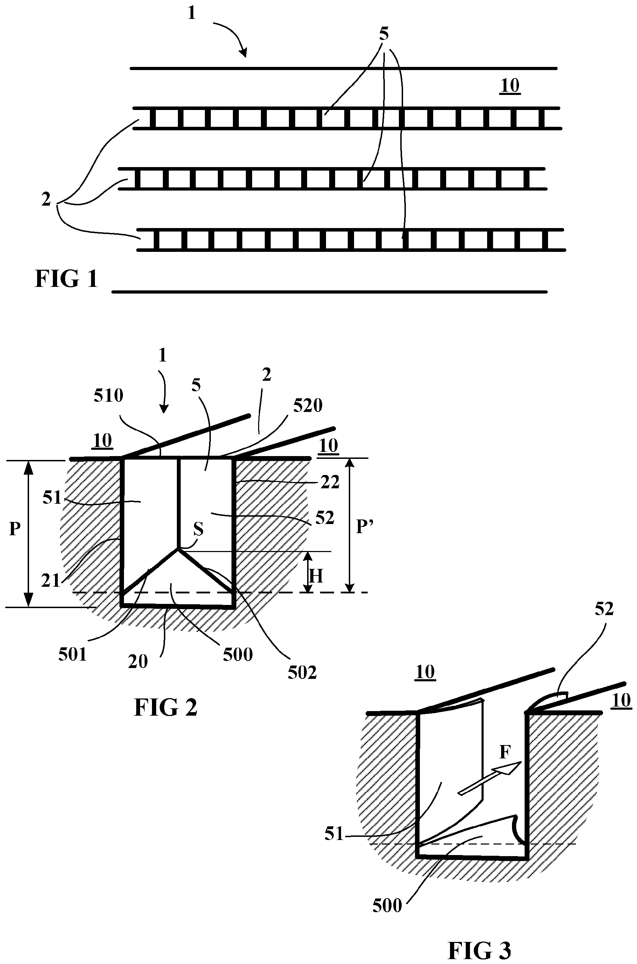

La figure 1 montre une vue partielle de la surface d'une bande de roulement de pneu, cette bande comprenant trois rainures 2 d'orientation circonférentielle. Pour réduire le bruit lié à la résonance de l'air dans chaque rainure au passage dans le contact avec la route, il est formé dans chaque rainure une pluralité de dispositifs réducteurs de bruit selon l'invention, chaque dispositif étant formé de plusieurs lames flexibles.

Sur la figure 2, l'un de ces dispositifs 5 est représenté à l'état fermé, c'est-à-dire dans une position telle que la section transversale de la rainure 2 est fermée en totalité - ici la section de la rainure est fermée sur 90% de sa surface - par ce dispositif 5 afin de réduire la longueur du tuyau rempli d'air pouvant entrer en résonance lors du contact avec une route et cela dans le but d'empêcher la circulation de l'air.

Sur cette figure 2, on distingue une rainure 2 d'orientation générale circonférentielle formée sur la bande de roulement 1. Cette rainure 2 est délimitée par des parois latérales 21, 22 d'éléments de relief, ces parois latérales en vis-à-vis étant reliées par un fond de rainure 20. Cette rainure 2 a une profondeur totale P à l'état neuf, c'est-à-dire avant tout roulage et donc avant toute usure. La bande de roulement comporte une surface de roulement 10 destinée à venir en contact avec la chaussée lors du roulage. Avec l'usure cette surface de roulement va changer et se rapprocher du fond des rainures. Afin de conserver une capacité de drainage suffisante en terme de sécurité, il est prévu de disposer dans les rainures des indicateurs de l'usure limite à ne pas dépasser. Cette limite d'usure est en règle générale fixée par les législations des pays (une ligne en traits pointillés est indiquée sur la figure 2 et se situe à une profondeur P' inférieure à la profondeur P de la rainure).

Dans cette rainure 2 on a formé une pluralité de dispositifs 5 réducteurs de bruit généré par résonance, chaque dispositif 5 étant constitué, dans cette première variante de l'invention, par une première lame flexible 500 et deux deuxièmes lames flexibles 51, 52, toutes ces lames flexibles étant réalisées en matériau caoutchouc de même nature que le matériau constituant la bande de roulement. La première lame flexible 500 est fixée au fond 20 de la rainure, c'est-à-dire sur la partie reliant les parois latérales 21, 22 et cela jusqu'à une hauteur égale à la limite d'usure fixée par la réglementation. Cette première lame flexible 500 est solidaire du fond de la rainure et présente deux bords libres 501, 502 pour former une géométrie de triangle isocèle, ces bords libres se rejoignant en un sommet S, ce sommet S se trouvant par rapport au fond de la rainure à une distance H sensiblement égale à 15% de la profondeur totale P de la rainure. Cette première lame flexible 500 a une épaisseur égale à 0.4 mm.

Chaque deuxième lame flexible 51, 52 est solidaire de l'une des parois latérales 21, 22 respectivement et s'étend dans la largeur de la rainure sur environ 50% de cette largeur. Chaque deuxième lame flexible 51, 52 présente un bord supérieur 510, 520 respectivement, ces bords étant destinés à venir en contact usant avec la route lors du roulage et un bord inférieur 511, 521 respectivement, ces bords inférieurs étant destinés à venir en face d'un bord 501, 502 de la première lame 500 pour assurer la complémentarité et ainsi fermer la section de la rainure. Les deux deuxièmes lames flexibles 51, 52 sont placées l'une en face de l'autre pour assurer avec la première lame la fermeture de la rainure sur au moins 70% de la section de cette rainure.

Dans le cas présent, la première lame 500 fixée au fond 20 de la rainure est prévue pour fléchir autour d'un axe joignant les points d'intersection de la paroi d'extrémité de cette première lame avec le fond de la rainure (cet axe est parallèle à la direction indiquée par la ligne en traits pointillés sur la figure 2).

Dans cette variante, les lames flexibles sont appropriées pour fléchir sous l'action d'une force générée par un flux de liquide notamment lors d'un roulage sur chaussée revêtue d'eau comme le montre la figure 3 représentant le dispositif 5 de la figure 2 en position d'ouverture. La flèche F indique la direction d'un flux de liquide circulant à l'intérieur de la rainure. C'est sous l'action de ce flux que les lames flexibles formant le dispositif 5 fléchissent autour d'un axe parallèle à la direction de la liaison entre la lame flexible et la paroi portant ladite lame.

Dans cette variante, les deuxièmes lames flexibles 51, 52 ont une épaisseur égale à 1 mm tandis que la première lame flexible fixée au fond de la rainure a une épaisseur égale à 0.6 mm. Le choix d'une plus faible épaisseur pour la première lame est très favorable puisqu'il permet de réduire l'effort nécessaire pour fléchir cette lame quel que soit le niveau d'usure de la bande.

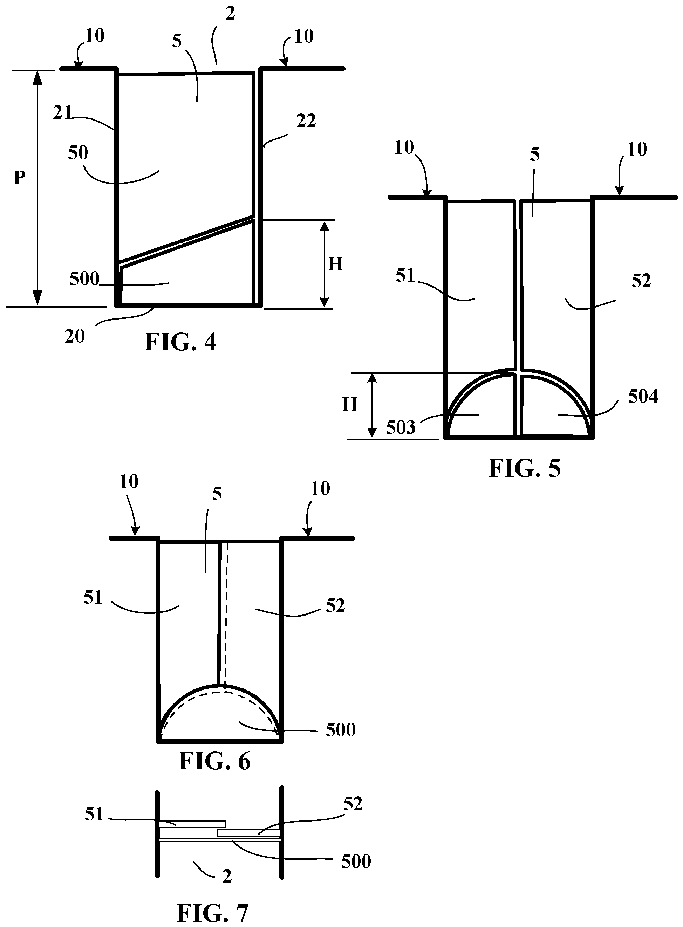

Dans une variante montrée avec la figure 4, un dispositif 5 réducteur de bruit selon l'invention comprend une première lame 500 et une deuxième lame 50. La première lame flexible 500 liée au fond 20 d'une rainure a une géométrie trapézoïdale, l'un de ses côtés suivant le profil d'une paroi latérale 21 délimitant la rainure sur une hauteur H correspondant à la hauteur maximale de cette première lame mesurée par rapport au point le plus à l'intérieur du fond 20 de la rainure. Par ailleurs la deuxième lame 50 liée à une paroi latérale a une géométrie complémentaire de celle de la première lame et s'étend sur toute la largeur de la rainure 2 afin de fermer en quasi-totalité la section de la rainure.

Dans une autre variante montrée avec la figure 5, un dispositif 5 selon l'invention comprend une première lame 500 et deux deuxième lames 51, 52. La première lame 500 flexible liée au fond d'une rainure est composée de deux lames flexibles 503, 504 séparées l'une de l'autre selon une coupe orientée dans la direction de la profondeur de la rainure. Cette première lame 500 a un bord qui suit une géométrie en demi-cercle, le rayon de ce demi-cercle étant ici égal à la moitié de la largeur de la rainure. Le dispositif comprend en outre deux deuxièmes lames 51, 52 complémentaires de la première lame dans le but de fermer la section de la rainure sur au moins 70% de cette section.

Les premières et deuxièmes lames flexibles des variantes décrites avec les variantes représentées sur les figures 1 à 5 sont disposées dans un même plan.

Dans une autre variante montrée avec la figure 6, un dispositif réducteur de bruit selon l'invention est semblable à celui montré avec la figure 5, à la différence que les première et deuxièmes lames flexibles ne sont pas toutes positionnées dans un même plan. En effet, il est créé un décalage entre les lames afin de pouvoir générer un léger chevauchement entre les lames et ainsi assurer un meilleur taux de fermeture de la section de la rainure. L'espace entre les lames est le plus réduit possible tout en satisfaisant aux contraintes de fabrication.

Sur la figure 7 montrant la surface de roulement de la bande à l'état neuf, on distingue dans la rainure 2 que la première lame flexible 500 et deuxièmes lames flexibles 51, 52 sont disposées en léger décalage les unes par rapport aux autres dans la direction principale de la rainure afin de permettre un léger chevauchement entre elles et ainsi augmenter le taux de fermeture et donc augmenter l'efficacité du dispositif.

L'invention ayant été décrite de manière générale et au moyen de quelques variantes, il doit être compris que cette invention n'est pas limitée à ces seules variantes décrites et représentées. Notamment lorsque les parois latérales délimitant une rainure font un angle différent de 90 degrés avec la surface de roulement à l'état neuf, il est aisé à la personne du métier d'adapter les géométries de chaque lame pour permettre une ouverture de la section de la rainure lors d'un roulage sur chaussée revêtue d'eau. Par ailleurs, les variantes décrites ici peuvent être combinées entre elles par la personne du métier en fonction de l'objectif poursuivi sans sortir de son cadre tel que défini par les revendications.

L'invention ayant été décrite de manière générale et au moyen de quelques variantes, il doit être compris que cette invention n'est pas limitée à ces seules variantes décrites et représentées. Notamment lorsque les parois latérales délimitant une rainure font un angle différent de 90 degrés avec la surface de roulement à l'état neuf, il est aisé à la personne du métier d'adapter les géométries de chaque lame pour permettre une ouverture de la section de la rainure lors d'un roulage sur chaussée revêtue d'eau. Par ailleurs, les variantes décrites ici peuvent être combinées entre elles par la personne du métier en fonction de l'objectif poursuivi sans sortir de son cadre tel que défini par les revendications.

## Revendications

1. Bande de roulement pour pneu, cette bande de roulement (1) ayant une surface de roulement (10) destinée à venir en contact avec une chaussée et comprenant au moins une rainure de profondeur P délimitée par deux parois latérales (21, 22) se faisant face, ces parois latérales étant reliées entre elles par un fond de rainure (20), cette bande étant telle qu'au moins une rainure (2) comporte une pluralité de dispositifs (5) de fermeture pour réduire le bruit de résonance en roulage généré par cette rainure, chaque dispositif de fermeture comprenant au moins deux lames flexibles, une première lame (500) flexible solidaire du fond (20) de la rainure et prévue pour fléchir autour d'un premier axe et une deuxième lame (51, 52) flexible solidaire d'une paroi latérale délimitant la rainure et prévue pour fléchir autour d'un deuxième axe, la première lame flexible liée au fond ayant une hauteur maximale H, les lames flexibles sont telles qu'elles ont des géométries appropriées pour coopérer les unes avec les autres afin de fermer au moins 70% de la section transversale de la rainure, cette bande étant **caractérisée en ce que** l'épaisseur de la première lame flexible (500) portée par le fond de rainure est inférieure à l'épaisseur de chaque deuxième lame flexible (51, 52) portée par une paroi latérale.

2. Bande de roulement (1) pour pneu selon la revendication 1 **caractérisée en ce que** la hauteur maximale H de la lame flexible (500) fixée sur le fond (20) est au plus égale à 80% de la profondeur P de la rainure et encore plus préférentiellement au plus égale à 50%.

3. Bande de roulement (1) pour pneu selon la revendication 1 ou la revendication 2 **caractérisée en ce que** le premier axe de flexion de la première lame flexible (500) est perpendiculaire au deuxième axe de flexion des deuxièmes lames flexibles (51, 52).

4. Bande de roulement (1) pour pneu selon l'une des revendications 1 à 3 **caractérisée en ce que** les lames flexibles (51, 52) comportent un bord faisant un angle moyen non nul avec une direction tangente à la surface de roulement à l'état neuf.

5. Bande de roulement (1) pour pneu selon la revendication 4 **caractérisée en ce que** l'angle moyen du bord interne des deuxièmes lames flexibles (51, 52) est au moins égal à 20° avec une direction tangente à la surface de roulement à l'état neuf.

6. Bande de roulement (1) pour pneu selon l'une des revendications 1 à 5 **caractérisée en ce que** lames flexibles (51, 52, 500) du dispositif (5) coopèrent pour fermer la section de la rainure (2) sur au moins 90% de cette section.

7. Bande de roulement (1) pour pneu selon l'une des revendications 1 à 6 **caractérisée en ce que** le dispositif de réduction de bruit formé dans une rainure comprend une première lame flexible (500) de géométrie triangulaire liée au fond de la rainure et au moins une deuxième lame flexible (51) portée sur une paroi latérale dont la géométrie est complémentaire de celle de la première lame.

8. Bande de roulement (1) pour pneu selon l'une des revendications 1 à 6 **caractérisée en ce que** le dispositif de réduction de bruit formé dans une rainure comprend une première lame flexible de géométrie triangulaire liée au fond de la rainure, cette première lame étant elle-même formée d'au moins deux lames et au moins une deuxième lame flexible portée sur une paroi latérale dont la forme est complémentaire de celle de la première lame.

9. Bande de roulement (1) pour pneu selon l'une des revendications 1 à 6 **caractérisée en ce que** le dispositif de réduction de bruit formé dans une rainure comprend une première lame flexible de géométrie triangulaire liée au fond de la rainure et au moins une deuxième lame flexible portée sur une paroi latérale dont la forme est complémentaire de celle de la première lame, ces première et deuxième lames flexibles étant décalées les unes par rapport aux autres dans la direction principale de la rainure de manière à pouvoir générer un léger chevauchement entre lesdites lames et ainsi obtenir un plus grand taux de fermeture de la section de la rainure.

10. Bande de roulement (1) pour pneu selon l'une des revendications 1 à 9 **caractérisée en ce que** l'épaisseur de chaque première lame flexible (500) liée au fond est au plus égale à 0.3 mm.

## Patentansprüche

1. Lauffläche für Reifen, wobei diese Lauffläche (1) eine Rollfläche (10) hat, die bestimmt ist, mit einer Straße in Kontakt zu kommen und mindestens eine Rille mit der Tiefe P umfasst, die von zwei gegenüberliegenden Seitenwänden (21, 22) begrenzt ist, wobei diese Seitenwände durch einen Rillenboden (20) miteinander verbunden sind, wobei diese Fläche derart ist, dass mindestens eine Rille (2) eine Vielzahl von Verschlussvorrichtungen (5) zwecks Reduzierung des von dieser Rille beim Fahren erzeugten Resonanzgeräuschs aufweist, wobei jede Verschlussvorrichtung mindestens zwei flexible Lamellen umfasst, eine erste flexible Lamelle (500), die mit dem Boden (20) der Rille fest verbunden ist und vorgesehen, um um eine erste Achse zu biegen, und eine zweite flexible Lamelle (51, 52), die mit einer die Rille begrenzenden Seitenwand fest verbunden ist und vorgesehen ist, um um eine zweite Achse zu biegen, wobei die erste flexible Lamelle, die mit dem Boden verbunden ist, eine maximale Höhe H hat, wobei die flexiblen Lamellen derart sind, dass sie geeignete Geometrien haben, um miteinander zusammenzuwirken, um mindestens 70 % des Querschnitts der Rille zu schließen, wobei diese Fläche **dadurch gekennzeichnet ist, dass** die Stärke der ersten flexiblen Lamelle (500), die von dem Rillenboden getragen wird, geringer ist als die Stärke jeder zweiten flexiblen Lamelle (51, 52), die von einer Seitenwand getragen wird.

2. Lauffläche (1) für Reifen nach Anspruch 1, **dadurch gekennzeichnet, dass** die maximale Höhe H der flexiblen Lamelle (500), die auf dem Boden (20) befestigt ist, höchstens 80 % der Tiefe P der Rille und noch vorzugsweiser höchstens 50 % entspricht.

3. Lauffläche (1) für Reifen nach Anspruch 1 oder Anspruch 2, **dadurch gekennzeichnet, dass** die erste Biegeachse der ersten flexiblen Lamelle (500) senkrecht zur zweiten Biegeachse der zweiten flexiblen Lamellen (51, 52) ist.

4. Lauffläche (1) für Reifen nach einem der Ansprüche 1 bis 3, **dadurch gekennzeichnet, dass** die flexiblen Lamellen (51, 52) einen Rand aufweisen, der einen mit einer zur Rollfläche im neuen Zustand tangentialen Richtung mittleren Winkel ungleich Null bildet.

5. Lauffläche (1) für Reifen nach Anspruch 4, **dadurch gekennzeichnet, dass** der mittlere Winkel des Innenrands der zwei flexiblen Lamellen (51, 52) mit einer zur Rollfläche im neuen Zustand tangentialen Richtung mindestens gleich 20° beträgt.

6. Lauffläche (1) für Reifen nach einem der Ansprüche 1 bis 5, **dadurch gekennzeichnet, dass** flexible Lamellen (51, 52, 500) der Vorrichtung (5) zusammenwirken, um den Querschnitt der Rille (2) über mindestens 90 % dieses Querschnitts zu schließen.

7. Lauffläche (1) für Reifen nach einem der Ansprüche 1 bis 6, **dadurch gekennzeichnet, dass** die in einer Rille ausgebildete Geräuschreduzierungsvorrichtung eine erste flexible Lamelle (500) mit dreieckiger Geometrie umfasst, verbunden mit dem Boden der Rille, und mindestens eine zweite flexible Lamelle (51), getragen auf einer Seitenwand, deren Form zu der der ersten Lamelle komplementär ist.

8. Lauffläche (1) für Reifen nach einem der Ansprüche 1 bis 6, **dadurch gekennzeichnet, dass** die in einer Rille ausgebildete Geräuschreduzierungsvorrichtung eine erste flexible Lamelle (500) mit dreieckiger Geometrie umfasst, verbunden mit dem Boden der Rille, wobei diese erste Lamelle selbst von mindestens zwei Lamellen und mindestens einer zweiten flexiblen Lamelle, getragen auf einer Seitenwand, gebildet ist, deren Form zu der der ersten Lamelle komplementär ist.

9. Lauffläche (1) für Reifen nach einem der Ansprüche 1 bis 6, **dadurch gekennzeichnet, dass** die in einer Rille ausgebildete Geräuschreduzierungsvorrichtung eine erste flexible Lamelle mit dreieckiger Geometrie umfasst, verbunden mit dem Boden der Rille, und mindestens eine zweite flexible Lamelle, getragen auf einer Seitenwand, deren Form zu der der ersten Lamelle komplementär ist, wobei diese erste und zweite flexible Lamelle in der Hauptrichtung der Rille derart zueinander versetzt sind, dass eine leichte Überlappung zwischen den Lamellen erzeugbar und somit ein höherer Verschlussgrad des Querschnitts der Rille erreichbar ist.

10. Lauffläche (1) für Reifen nach einem der Ansprüche 1 bis 9, **dadurch gekennzeichnet, dass** die Stärke jeder mit dem Boden verbundenen ersten flexiblen Lamelle (500) höchstens gleich 0,3 mm entspricht.

## Claims

1. A tread for a tire, this tread (1) having a tread surface (10) intended to come into contact with a roadway and comprising at least one groove of depth P delimited by two facing lateral walls (21, 22), these facing lateral walls being connected together by a groove bottom (20), this tread being such that at least one groove (2) comprises a plurality of closing devices (5) for reducing the running resonance noise generated by this groove, each closing device comprising at least two flexible blades, a first flexible blade (500) secured to the bottom (20) of the groove and provided to flex around a first axis and a second flexible blade (51, 52) secured to a lateral wall delimiting the groove and provided to flex around a second axis, the first flexible blade connected to the bottom having a maximum height H, the flexible blades are such that they have suitable geometries to cooperate with one another to close at least 70 % of the cross section of the groove, this tread being **characterized in that** the thickness of the first flexible blade (500) carried by the groove bottom is less than the thickness of each second flexible blade (51, 52) carried by a lateral wall.

2. The tread (1) for a tire according to claim 1, **characterized in that** the maximum height H of the flexible blade (500) secured to the bottom (20) is at most equal to 80 % of the depth P of the groove and even more preferably at most equal to 50 %.

3. The tread (1) for a tire according to claim 1 or claim 2, **characterized in that** the first flexion axis of the first flexible blade (500) is perpendicular to the second flexion axis of the second flexible blades (51, 52).

4. The tread (1) for a tire according to any one of claims 1 to 3, **characterized in that** the flexible blades (51, 52) comprise an edge that makes a non-zero average angle with a direction tangential to the tread surface in the new state.

5. The tread (1) for a tire according to claim 4, **characterized in that** the average angle of the internal edge of the second flexible blades (51, 52) is at least equal to 20° with a direction tangential to the tread surface in the new state.

6. The tread (1) for a tire according to any one of claims 1 to 5, **characterized in that** the flexible blades (51, 52, 500) of the device (5) cooperate to close the cross section of the groove (2) over at least 90 % of this cross section.

7. The tread (1) for a tire according to any one of claims 1 to 6, **characterized in that** the noise reducing device formed in a groove comprises a first flexible blade (500) of triangular geometry connected to the bottom of the groove and at least one second flexible blade (51) carried on a lateral wall and the geometry of which is complementary to that of the first blade.

8. The tread (1) for a tire according to any one of claims 1 to 6, **characterized in that** the noise reducing device formed in a groove comprises a first flexible blade of triangular geometry connected to the bottom of the groove, this first blade itself being formed of at least two blades and at least one second flexible blade carried on a lateral wall and the shape of which is complementary to that of the first blade.

9. The tread (1) for a tire according to any one of claims 1 to 6, **characterized in that** the noise reducing device formed in a groove comprises a first flexible blade of triangular geometry connected to the bottom of the groove and at least one second flexible blade carried on a lateral wall and the shape of which is complementary to that of the first blade, these first and second flexible blades being offset from one another in the main direction of the groove so as to be able to create a slight overlap between said blades and thus to obtain a larger degree of closure of the cross section of the groove.

10. The tread (1) for a tire according to any one of claims 1 to 9, **characterized in that** the thickness of each first flexible blade (500) connected to the bottom is at most equal to 0.3 mm.
